# EUROPEAN PATENT SPECIFICATION

(11) **EP 3 971 119 B1**
(45) Date of publication and mention of the grant of the patent: **10.05.2023**
(21) Application number: 21195903.6
(22) Date of filing: 10.09.2021
(51) Int. Cl.: B65G 69/28

(54) **LOADING/UNLOADING STATION COMPRISING A RAMP AND LOADING/UNLOADING PROCESS**
BE-/ENTLADESTATION MIT EINER RAMPE UND VERFAHREN ZUM BE-/ENTLADEN
STATION DE CHARGEMENT/DÉCHARGEMENT COMPRENANT UNE RAMPE ET PROCÉDÉ DE CHARGEMENT/DÉCHARGEMENT

(30) Priority: 14.09.2020 IT 202000021700
(43) Date of publication of application: 23.03.2022
(73) Proprietor: TM Pedane Srl, 63812 Montegranaro (FM) (IT)
(72) Inventor: TROBBIANI, ALICE, 63812 MONTEGRANARO (FM) (IT); TROBBIANI, ANDREA, 62010 MORROVALLE (MC) (IT); TROBBIANI, GIORGIO, 63812 MONTEGRANARO (FM) (IT); DA CUNHA, JOAQUIM, 43120 MONISTROL-SUR-LOIRE (HAUTE-LOIRE) (FR); PEREZ, ALEXANDRA, 69440 TALUYERS (RHONE) (FR)
(74) Representative: Baldi, Claudio

(56) References cited:
- DE-A1-102007 052 349
- FR-A- 1 590 728
- FR-A1- 2 917 077
- US-A- 5 040 258
- US-A1- 2008 184 503

## Description

The present patent application for industrial invention relates to an innovative loading/unloading station comprising a ramp.

A further object of the present invention is a loading/unloading unit comprising a vehicle and said innovative loading/unloading station.

Another object of the present invention is a process for the loading/unloading of goods from a vehicle in a loading/unloading unit according to the present patent application.

The present invention has been developed to solve the problems related with logistic warehouses, and more precisely to the safety problems related with the loading/unloading areas of said warehouses, wherein means of transportation, such as trucks or trailer trucks, are driven and/or parked.

Said warehouses comprise raised docks that must be approached by a vehicle in reverse gear, in such a way that the rear door of said vehicle can be opened and the goods can be handled, using the supporting surface of the dock, which is disposed at a height that corresponds approximately to the height of the loading surface of the vehicle.

It is precisely in said loading/unloading area that the most severe problems occur for the operators who work in the vicinity of this area, and in the worst case said problems may involve serious injuries caused by crushing.

The two cases with the risk of crushing for the operator can occur when:
- while driving in reverse gear towards the parking station in the vicinity of said dock, due to reduced visibility, the driver of the vehicle cannot detect the presence of people behind the vehicle.
- the operators who are located on the dock may accidentally fall under the dock on the parking station while the vehicle is approaching the dock in reverse gear.

In order to avoid such problems, said docks have been equipped with extendable ramps designed to avoid the above-mentioned inconveniences.

Said ramps comprise a main platform, which does not project from the dock to which it is fixed, and a secondary platform capable of assuming a first position, wherein it does not project from the dock, and a second position, wherein it projects from the dock and wherein it is substantially an extension of the main platform of the ramp.

In view of the above, said extendable ramps can be disposed flush with the dock while the vehicle approaches the dock in reverse gear, and can be extended towards the vehicle when the vehicle has stopped in the vicinity of the dock.

In this way the vehicle can stop at a safety distance from the dock since the secondary platform of the ramp will make it possible to connect the loading surface of the vehicle with the dock itself.

There are two types of such ramps, which differ from each other in the means used to connect the secondary platform to the main platform: in a first type of ramps, such means allow for translating the secondary platform under the main platform, thus creating a telescopic ramp, whereas in a second type of ramps, such means allow for rotating the secondary platform with respect to the main platform.

More precisely, a telescopic ramp is composed of two platforms, namely an upper platform and a lower platform, which can be moved closer or further away by means of a hydraulic system so that the ramp can assume a contracted position, when the vehicle is approaching the dock in reverse gear, and an extended position, when the vehicle is already parked on the parking station in the vicinity of the dock.

As mentioned above, because of the provision of said ramp, the vehicle can be parked near the dock without having to get too close to the dock, thus avoiding the danger of crushing a person positioned near the dock; moreover, thanks to its extension, said ramp allows for connecting the loading/unloading surface of the dock with the internal surface of the vehicle, more precisely of the compartment of the vehicle where said goods are loaded/unloaded.

More precisely, an extensible ramp comprises a secondary platform, which is normally arranged vertically under the main platform and is rotated upwards by approximately 90° when it must be arranged in coplanar position relative to the main platform, facing the vehicle and resting on the loading surface of the vehicle itself.

This type of ramps is impaired by the fact that they have a limited extension, meaning that, when it is arranged vertically, the secondary platform is contained in a compartment that is used to house the entire ramp and therefore its extension cannot be greater than the height of that compartment.

On the contrary, such a problem does not exist with telescopic ramps. However, being supported in projecting position, said secondary platform cannot extend beyond certain dimensions.

A further drawback of such telescopic ramps is represented by the fact that objects can be moved by passing over the secondary platform of the ramp only when the ramp is supported by the vehicle.

The aforementioned drawbacks have been described in order to make the reader understand that the safety distance, i.e. the distance at which the vehicle must stop with respect to the dock, is a function of said secondary platform, which is not sufficiently long.

If the length of said secondary platform, which is currently about 400 mm, is increased, problems will arise with reference to the following two aspects.

The first aspect concerns the opening of the rear door of the vehicle as soon as the vehicle has stopped near the platform; said rear door is opened by the operators who are situated on the dock, who have to lean out of the dock, while standing on the main platform of the ramp, in such a way to grab and actuate the handles of the rear door of the vehicle.

If the secondary platform is extended to increase the safety distance, the vehicle would be parked too far away from the ramp and the operators who are situated on the dock would not be able to reach the handles or could fall down in an attempt to reach them.

The second aspect concerns the unloading of the goods from the vehicle compartment, which is sometimes so full of goods that some of these goods may be placed so close to the rear edge of the loading surface that the ramp would not have enough space to be placed and supported on the loading surface.

In these cases, the goods must first be unloaded, using forklifts or hoists that travel over the ramp, which is still in a contracted position; thanks to the length of the arms of the forklifts, it is possible to reach the goods that are on the edge of the loading surface, move the goods, and then move the ramp in extended position, resting on the loading surface of the vehicle in such a way that the forklift can travel over the ramp until it reaches the interior of the vehicle compartment where the remaining goods can be loaded/unloaded.

If the vehicle is parked too far away from the dock, the preliminary unloading operation, which is carried out when the ramp is still in contracted position, cannot be performed due to the excessive distance between the main platform, whereon the forklift is positioned, and the loading surface of the vehicle, which must be reached by the arms of the forklift in order to lift the goods to be loaded/unloaded.

If, on the one hand, it would be desirable to increase the safety distance in order to avoid accidents due to crushing, on the other hand, it is evident that, using the ramps of the prior art, parking the vehicle too far from the dock may generate more or less serious accidents due to the fact that the operators or the forklifts may fall over the edge of the dock in an attempt to reach the vehicle or the goods contained therein.

Additionally, it should be pointed out that, during the loading/unloading of a vehicle, there are other operations that are difficult to carry out with the ramps of the prior art and that must be carried out by improvising unsafe loading/unloading procedures, thus increasing the risk of serious accidents.

US5040258 describes a loading/unloading station for vehicles according to the preamble of the independent claim 1.

The purpose of the present invention is to overcome the drawbacks of the prior art, by disclosing an innovative loading/unloading station comprising an innovative ramp.

An additional purpose of the present invention is to devise a loading/unloading unit comprising a vehicle and said innovative loading/unloading station.

Another object of the present invention is a process for the loading/unloading of goods from a vehicle (V) in the loading/unloading unit.

These purposes are achieved according to the invention with the characteristics of the appended independent claims.

Advantageous embodiments appear from the dependent claims.

The loading/unloading station of the invention is defined by the independent claim 1.

For the sake of clarity, the description of the loading/unloading station according to the invention continues with reference to the appended drawings, which have a merely illustrative, not limiting value, wherein:
- Figs. 1 to 6 are diagrammatic side views of a loading/unloading unit comprising the loading/unloading station according to the invention and a vehicle; said figures show the operation of the ramp of the loading/unloading station according to the different operating steps;
- Fig. 7 is an axonometric bottom view of the ramp of the loading/unloading station, when the ramp is in non-operating position;
- Fig. 8 is a side view of the ramp of Fig. 7;
- Fig. 9 is an axonometric bottom view of the ramp of the loading/unloading station, when the ramp is in operating position;
- Fig. 10 is a side view of the ramp of Fig. 9;
- Figs. 11 to 18 are diagrammatic side views of a loading/unloading unit comprising the loading/unloading station according to the invention and a vehicle; said figures show the operation of the ramp according to the invention when an operator and a means of transportation must approach the vehicle in order to start unloading, opening the rear door of the vehicle and moving the goods that rest on the surface whereon the ramp is to be positioned.

With reference to the appended figures, the loading/unloading station for a vehicle (V) comprises:
- a parking area (SP) wherein said vehicle (V) is parked during loading/unloading;
- a dock (B) comprising a loading/unloading area (SB) that is disposed at a height (H) with respect to said parking area (SP);
- a ramp (R) integral with said dock (B); said ramp (R) comprising a connection edge (RC) connected to said dock (B), and a free edge (RL); said ramp (R) being suitable for being disposed in an operating position, in order to unload the goods from the rear opening (A) of the vehicle (V) on the loading/unloading area (SB) of the dock (B), and in a non-operating position;

Said ramp (R) comprises:
- a main platform (1) that comprises a supporting surface (S1);
- main hinging means (C1) that connect said main platform (1) to the dock (B); said main hinging means (C1) has an axis of rotation parallel to said connection edge (RC) and allows for moving said main platform (1) between a lowered position, wherein the supporting surface (S1) of the main platform (1) is coplanar to the loading/unloading surface (SB) of the dock (B), and a raised position;
- a secondary platform (2) connected to said main platform (1) and comprising a supporting surface (S2); said secondary platform (2) being mobile relative to the main platform (1);
- an end platform (3) that is connected to said secondary platform (2) and comprises a supporting surface (S3);
- end hinging means (C3) that connect said end platform (3) to said secondary platform (2); said end hinging means (C3) allow the end platform (3) to be in an idle position, wherein the supporting surface (S3) of the end platform (3) is orthogonal to the supporting surface (S2) of the secondary platform (2), and an operating position, wherein said two supporting surfaces (S2, S3) are coplanar.

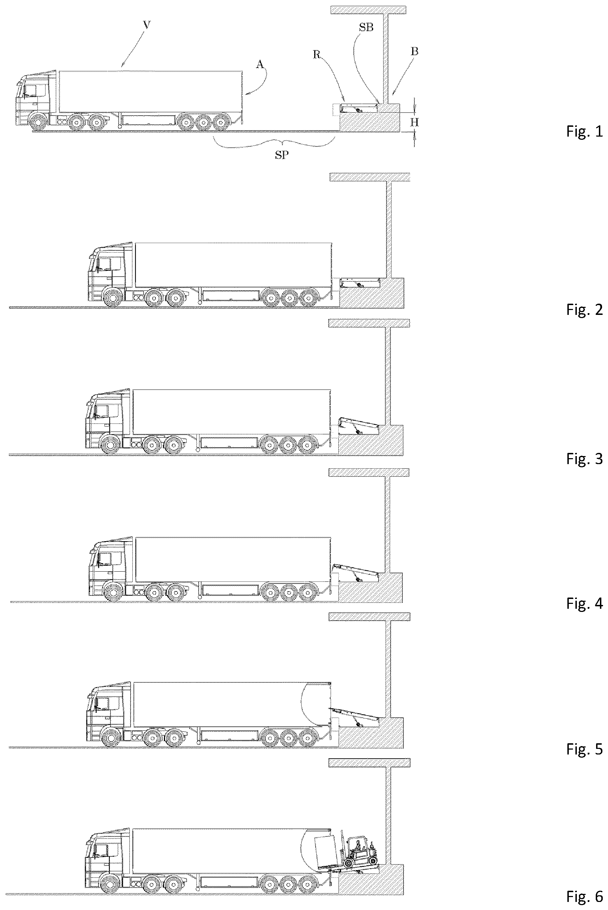

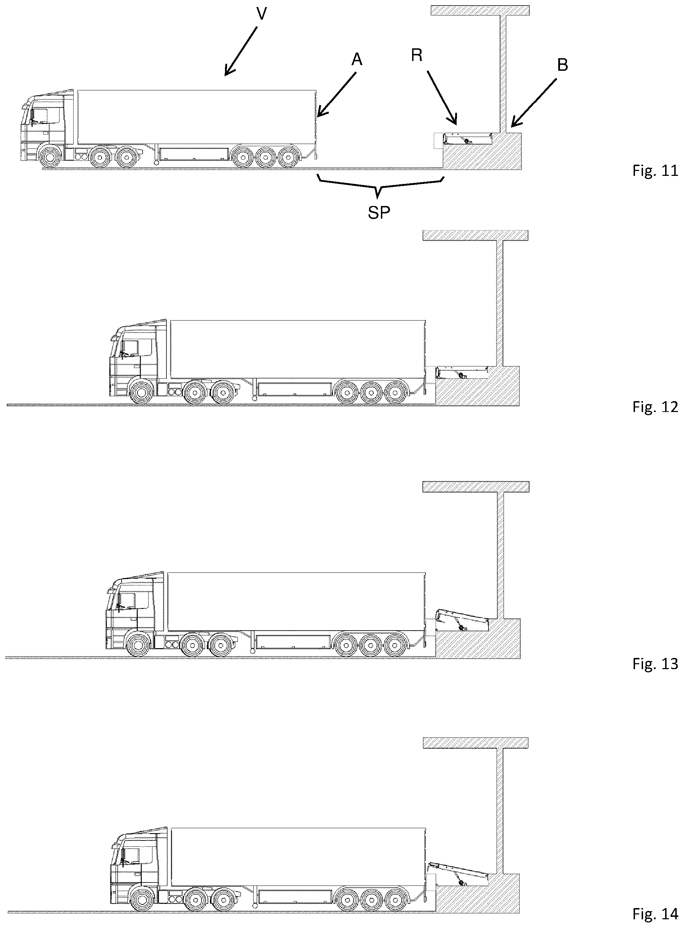

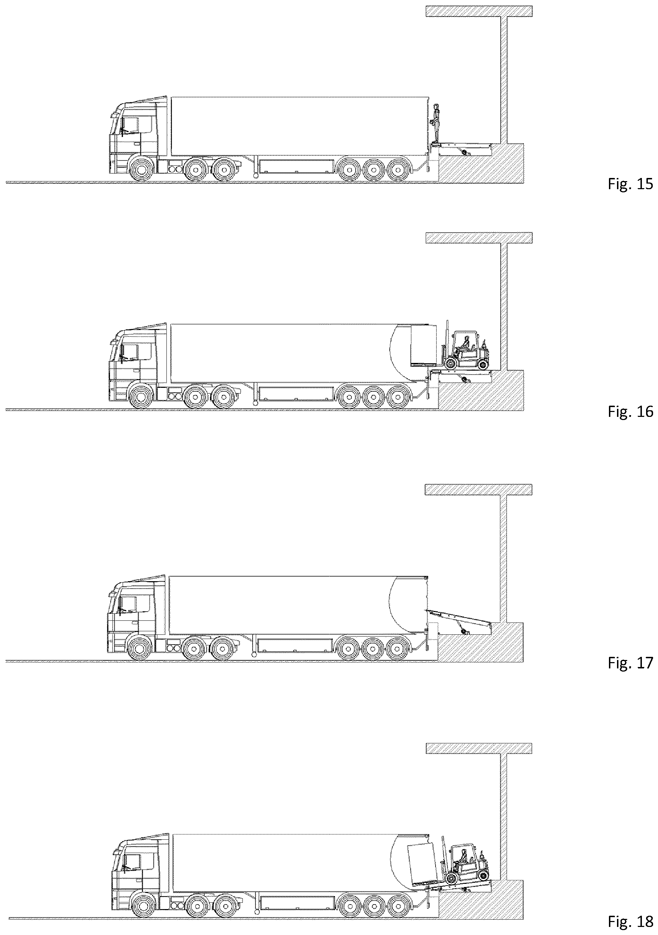

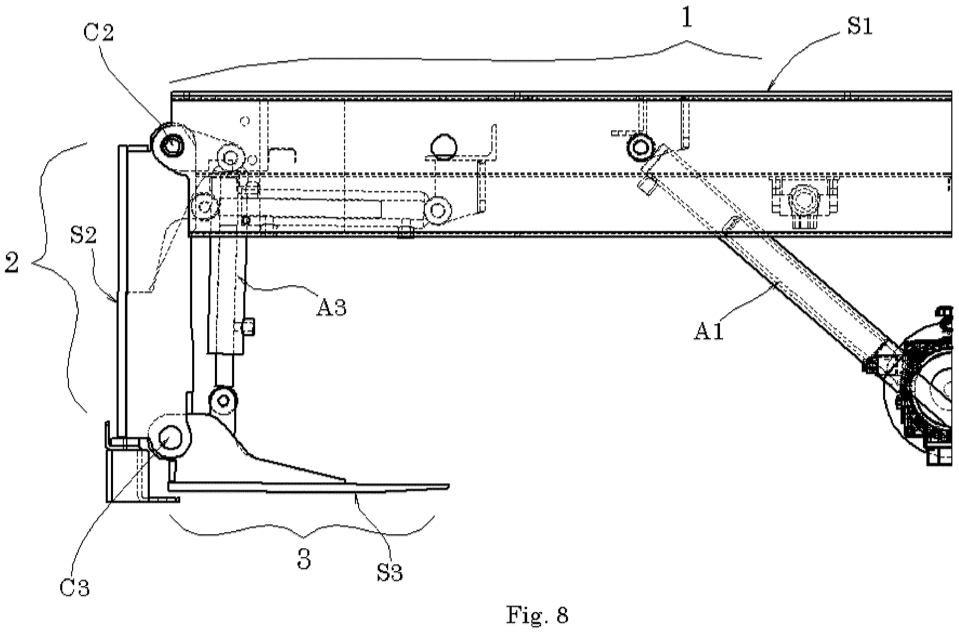

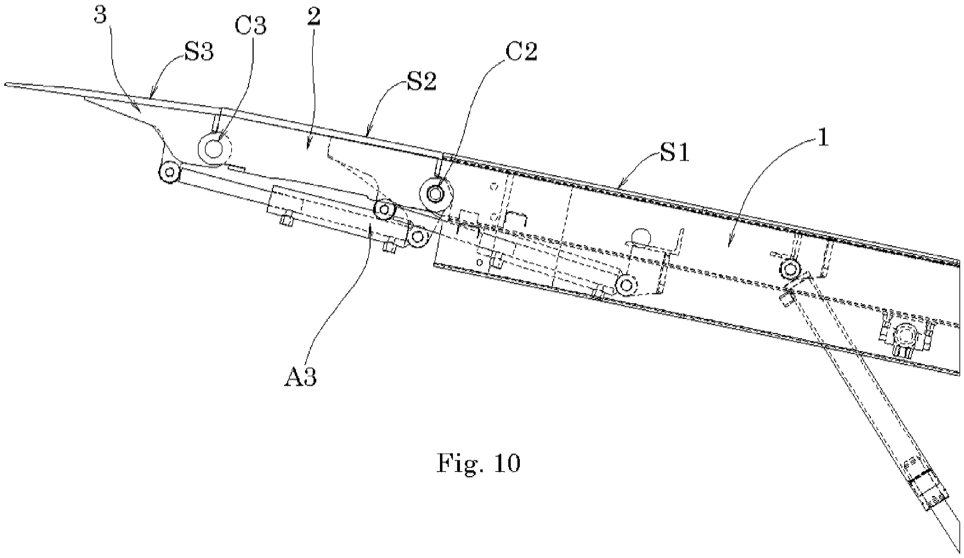

With reference to Figs. 11 to 18, according to a preferred embodiment, said ramp (R) comprises:
- secondary hinging means (C2) that connect said main platform (1) to said secondary platform (2); said secondary hinging means (C2) allow the secondary platform (2) to be disposed in an idle position, which is shown in Figs. 1, 2, 3, 7 and 8, wherein the supporting surface (S2) of the secondary platform (3) is orthogonal to the supporting surface (S1) of the main platform (1), and in an operating position, which is shown in Figs. 4, 5, 6, 9, and 10, wherein said two supporting surfaces (S1, S2) are coplanar.

Still according to said embodiment, said ramp (R) comprises:
- end hinging means (C3) that connect said end platform (3) to said secondary platform (2); said end hinging means (C3) allow the end platform (3) to be disposed in an idle position, which is shown in Figs. 1, 2, 3, 4, 7 and 8, wherein the supporting surface (S3) of the end platform (3) is orthogonal to the supporting surface (S2) of the secondary platform (2), and in an operating position, which is shown in figures 5, 6, 9 and 10, wherein said two supporting surfaces (S2, S3) are coplanar.

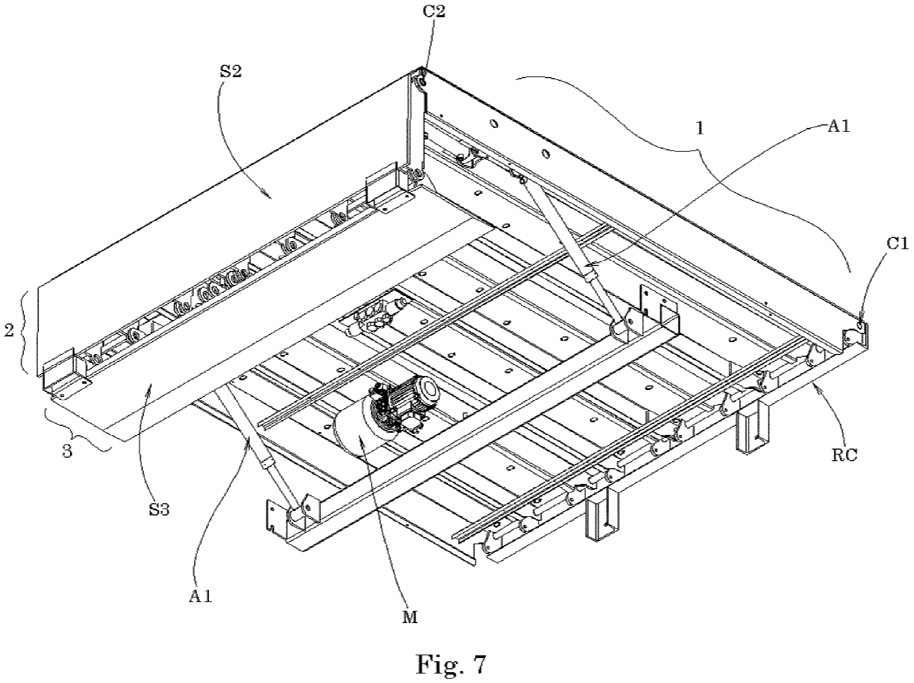

With reference to Figs. 7 to 10, said main hinging means (C1) comprise two main actuators (A1) connected under the main platform (1).

Said main actuator (A1) can be disposed in a contracted position, which is shown in Figs. 1, 2, 6, 7 and 8, which corresponds to the lowered position of the main platform (1), and in an extended position, which is shown in Figs. 3, 4, 5 and 9, which corresponds to the raised position of the main platform (1).

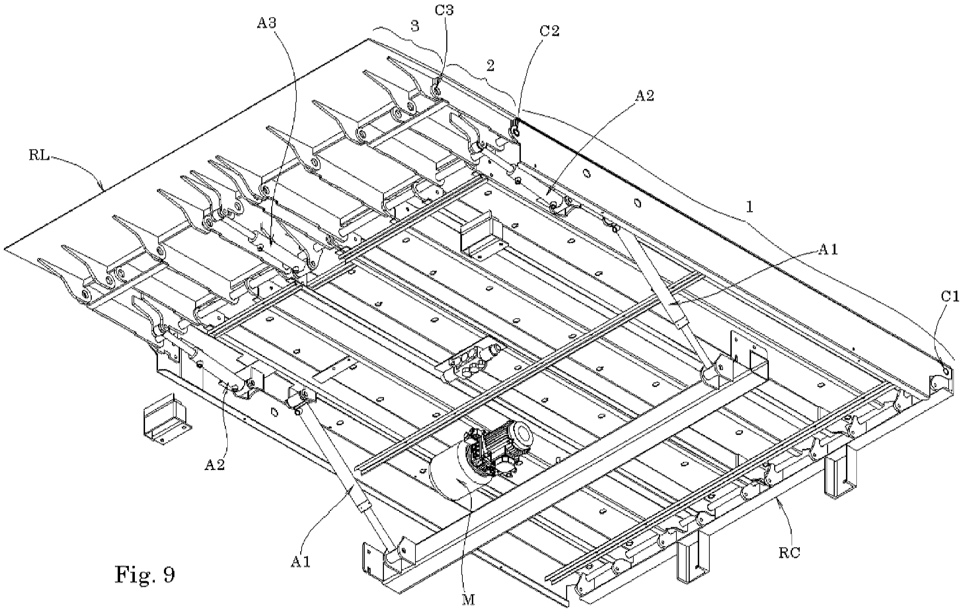

With reference to Fig. 9, said secondary hinging means (C2) comprise two secondary actuators (A2), each one of which is connected underneath between the secondary platform (2) and the main platform (1).

Said secondary actuator (A2) can be disposed in a contracted position, which is shown in Figs. 1, 2, 3, 7 and 8, which corresponds to the non-operating position of the secondary platform (2), and in an extended position, which is shown in Figs. 4, 5, 6, 9 and 10, which corresponds to the operating position of the secondary platform (2).

With reference to Fig. 9, said end hinging means (C3) comprise an end actuator (A3) connected underneath below between the secondary platform (2) and the end platform (3).

Said end actuator (A3) can be disposed in a contracted position, which is shown in Figs. 1, 2, 3, 4, 7 and 8, which corresponds to the non-operating position of the end platform (3), and in an extended position, which is shown in Figs. 5, 6, 9 and 10, which corresponds to the operating position of the end platform (3).

As shown in Figs. 7 and 9, the ramp is motorized and comprises actuation means for said actuator(s), which in this case consist of a motor (M) installed on board the ramp (R).

An additional object of the present invention in a loading/unloading unit comprising:
- a loading/unloading station of the type described above, and
- a vehicle (V) comprising a rear opening (A) that provides access to a compartment of said vehicle (V) wherein goods are loaded from the dock (B) or wherefrom goods are unloaded on the dock (B); it being provided that when the ramp (R) is in operating position, said free edge (RL) is in contact with said vehicle (V) and allows to load/unload the goods, as shown in Fig. 6.

This description continues illustrating two different processes for using the loading/unloading unit according to the present invention.

The first process, which is shown in Figs. 1 to 6, relates to a loading/unloading unit comprising:
- a loading/unloading station comprising a ramp (R) composed of the main platform (1), the secondary platform (2) and the end platform (3) and
- a vehicle (V) comprising a rear opening (A) that provides access to a compartment of said vehicle (V) wherein the goods are loaded from the dock (B) or wherefrom the goods are unloaded on the dock (B);
said process providing for:
- positioning the ramp (R) with the main platform (1) in lowered position and with the secondary platform (2) and the end platform (3) in non-operating positions, as shown in Fig. 1;
- positioning said vehicle (V) in the parking area (SP) in the proximity of said dock (B), as shown in Fig. 2;
- positioning the main platform (1) of the ramp (R) in raised position, as shown in Fig. 3;
- positioning the secondary platform (2) in operating position, as shown in Fig. 4;
- positioning the end platform (3) in operating position, as shown in Fig. 5;
- positioning the ramp (R) in operating position, with the main platform (1) in lowered position; it being provided that when the ramp (R) is in operating position, said free edge (RL) is in contact with said vehicle (V) and allows to load/unload the goods, as shown in Fig. 6.

The second procedure, which is shown in Figs. 11 to 18, relates to a loading/unloading unit comprising:
- a loading/unloading station comprising a ramp (R) composed of the main platform (1), the secondary platform (2) and the end platform (3) and
- a vehicle (V) comprising a rear opening (A) that provides access to a compartment of said vehicle (V) wherein the goods are loaded from the dock (B) or wherefrom the goods are unloaded on the dock (B);
said process providing for:
- positioning the ramp (R) with the main platform (1) in lowered position and with the secondary platform (2) and the end platform (3) in non-operating positions;
- positioning said vehicle (V) in the parking area (SP) in the proximity of said dock (B);
- positioning the main platform (1) of the ramp (R) in raised position;
- positioning the secondary platform (2) in operating position;
- positioning the main platform (1) in lowered position in such a way that a user and/or unloading means can travel over the main platform (1) until it is parked on the secondary platform (2), close to the vehicle (V), in such a way to start loading/unloading the goods by opening the rear door of the vehicle (V);
- moving the main platform (1) to the raised position as soon as said user and/or said unloading means have left the ramp;
- positioning the end platform (3) in operating position;
- positioning the ramp (R) in operating position, with the main platform (1) in lowered position; it being provided that when the ramp (R) is in operating position, said free edge (RL) is in contact with said vehicle (V) and allows to load/unload the goods.

## Claims

1. Loading/unloading station for a vehicle (V) comprising a rear opening (A) that provides access to a compartment of said vehicle (V) wherefrom goods are to be loaded/unloaded; loading/unloading station comprising:
- a parking area (SP) wherein said vehicle (V) is parked during loading/unloading;
- a dock (B) comprising a loading/unloading area (SB) that is disposed at a height (H) with respect to said parking area (SP);
- a ramp (R) integral with said dock (B); said ramp (R) comprising a connection edge (RC) connected to said dock (B), and a free edge (RL); said ramp (R) being suitable for being disposed in an operating position to allow unloading from the rear opening (A) of the vehicle (V) on the loading/unloading area (SB) of the dock (B), and in a non-operating position;
said ramp (R) comprising:
- a main platform (1) that comprises a supporting surface (S1);
- main hinging means (C1) that connect said main platform (1) to the dock (B); said main hinging means (C1) having an axis of rotation parallel to said connection edge (RC) and allowing to move said main platform (1) between a lowered position, wherein the supporting surface (S1) of the main platform (1) is coplanar to the loading/unloading area (SB) of the dock (B), and a raised position;
- a secondary platform (2) connected to said main platform (1) and comprising a supporting surface (S2); said secondary platform (2) being mobile relative to the main platform (1), and suitable for being disposed in a non-operating position and an operating-position;
- an end platform (3) that is connected to said secondary platform (2) and comprises a supporting surface (S3);
- end hinging means (C3) that connect said end platform (3) to said secondary platform (2); said end hinging means (C3) allowing the end platform (3) to be in an idle position, wherein the supporting surface (S3) of the end platform (3) is orthogonal to the supporting surface (S2) of the secondary platform (2), and in an operating position, wherein said two supporting surfaces (S2, S3) are coplanar.
**characterized in that** said ramp (R) comprises:
- secondary hinging means (C2) that connect said main platform (1) to said secondary platform (2); said secondary hinging means (C2) allow the secondary platform (2) to be in an idle position, wherein the supporting surface (S2) of the secondary platform (3) is orthogonal to the supporting surface (S1) of the main platform (1), and in an operating position, wherein said two supporting surfaces (S1, S2) are coplanar.

2. The loading/unloading station of claim 1,wherein said main hinging (C1) comprise a main actuator (A1) connected to the main platform (1); said main actuator (A1) being suitable for being disposed in a contracted position, which corresponds to the lowered position of the main platform (1), and an extended position, which corresponds to the raised position of the main platform (1).

3. The loading/unloading station according to any one of the preceding claims, wherein said end hinging means (C3) comprise an end actuator (A3) that connects the secondary platform (2) to the end platform (3); said end actuator (A3) being suitable for being disposed in a contracted position, which corresponds to the non-operating position of the end platform (3), and in an extended position, which corresponds to the operating position of the end platform (3).

4. The loading/unloading station according to any one of the preceding claims, wherein said secondary hinging means (C2) comprise a secondary actuator (A2) that connects the secondary platform (2) to the main platform (1); said secondary actuator (A2) being suitable for being disposed in a contracted position, which corresponds to the non-operating position of the secondary platform (1), and an extended position, which corresponds to the operating of the secondary platform (1).

5. Loading/unloading unit comprising:
- a loading/unloading station according to any one of the preceding claims, and
- a vehicle (V) comprising a rear opening (A) that provides access to a compartment of said vehicle (V) wherein goods are to be loaded from the dock (B) or wherefrom goods are to be unloaded on the dock (B); it being provided that when the ramp (R) is in operating position, said free edge (RL) is in contact with said vehicle (V) and allows to load/unload said goods.

6. Loading/unloading process of a loading/unloading unit, comprising:
- a loading/unloading station according to claim 1;
- a vehicle (V) comprising a rear opening (A) that provides access to a compartment of said vehicle (V) wherein goods are to be loaded from the dock (B) or wherefrom goods are to be unloaded on the dock (B);
said process providing for:
- positioning the ramp (R) with the main platform (1) in lowered position and with the secondary platform (2) and the end platform (3) in non-operating positions;
- positioning said vehicle (V) in the parking area (SP) in the proximity of said dock (B);
- positioning the main platform (1) of the ramp (R) in raised position;
- positioning the secondary platform (2) in operating position;
- positioning the main platform (1) in lowered position in such a way that a user and/or unloading means can pass over the main platform (1) until it is parked on the secondary platform (2), close to the vehicle (V), in such a way to start loading/unloading by opening the rear door of the vehicle (V);
- moving the main platform (1) to the raised position as soon as said user and/or said unloading means have left the ramp;
- positioning the end platform (3) in operating position;
- positioning the ramp (R) in operating position, with the main platform (1) in lowered position; it being provided that when the ramp (R) is in operating position, said free edge (RL) is in contact with said vehicle (V) and allows to load/unload said goods.

7. Loading/unloading process of a loading/unloading unit, comprising:
- a loading/unloading station according to any one of claims 1 to 4;
- a vehicle (V) comprising a rear opening (A) that provides access to a compartment of said vehicle (V) wherein goods are to be loaded from the dock (B) or wherefrom goods are to be unloaded on the dock (B);
said process providing for:
- positioning the ramp (R) with the main platform (1) in lowered position and with the secondary platform (2) and the end platform (3) in non-operating positions;
- positioning said vehicle (V) in the parking area (SP) in the proximity of said dock (B);
- positioning the main platform (1) of the ramp (R) in raised position;
- positioning the secondary platform (2) in operating position;
- positioning the end platform (3) in operating position;
- positioning the ramp (R) in operating position, with the main platform (1) in lowered position; it being provided that when the ramp (R) is in operating position, said free edge (RL) is in contact with said vehicle (V) and allows to load/unload said goods.

## Patentansprüche

1. Belade-/Entladestation für ein Fahrzeug (V), umfassend eine hintere Öffnung (A) für den Zugang zu einem Innenraum des Fahrzeugs (V), aus dem/in den Waren geladen bzw. entladen werden; wobei die Belade-/Entladestation umfasst:
- eine Parkfläche (SP), auf der das Fahrzeug (V) während des Beladens bzw. Entladens geparkt ist;
- eine Rampe (B), umfassend eine Belade-/Entladefläche (SB), die sich auf einer Höhe (H) in Bezug auf die Parkfläche (SP) befindet;
- eine fest mit der Rampe (B) verbundene Rampe (R); wobei die Rampe (R) eine Verbindungsendkante (RC), die mit der Rampe (B) verbunden ist, und eine freie Endkante (RL) umfasst; wobei die Rampe (R) eine Betriebsstellung, die das Entladen aus der hinteren Öffnung (A) des Fahrzeugs (V) auf die Belade-/Entladefläche (SB) der Rampe (B) erlaubt, und eine Nicht-Betriebsstellung einnehmen kann;
wobei die Rampe (R) umfasst:
- eine Hauptplattform (1), die eine Auflagefläche (S1) umfasst;
- Hauptscharniermittel (C1), die die Hauptplattform (1) mit der Rampe (B) verbinden; wobei die Hauptscharniermittel (C1) eine Drehachse parallel zur Verbindungsendkante (RC) aufweist und die Bewegung der Hauptplattform (1) zwischen einer abgesenkten Stellung, in der die Auflagefläche der Hauptplattform (1) koplanar mit der Entlade-/Beladefläche (SB) der Rampe (B) ist, und einer angehobenen Stellung erlaubt;
- Sekundärplattform (2), die mit der Hauptplattform (1) verbunden ist und eine Auflagefläche (S2) umfasst; wobei die Sekundärplattform (2) in Bezug auf die Hauptplattform (1) beweglich ist und eine Nicht-Betriebsstellung und eine Betriebsstellung einnehmen kann;
- eine Endplattform (3), die mit der Sekundärplattform (2) verbunden ist und eine Auflagefläche (S3) umfasst;
- Endscharniermittel (C3), die die Endplattform (3) mit der Sekundärplattform (2) verbinden; wobei die Endscharniermittel (C3) es der Endplattform (3) erlauben, eine Ruhestellung einzunehmen, in der die Auflagefläche (S3) der Endplattform (3) rechtwinklig zur Auflagefläche (S2) der Sekundärplattform (2) ist, und eine Betriebsstellung einzunehmen, in der die beiden Auflageflächen (S2, S3) koplanar sind;
**dadurch gekennzeichnet, dass** die Rampe (R) umfasst:
- Sekundärscharniermittel (C2), die die Hauptplattform (1) mit der Sekundärplattform (2) verbinden; wobei die Sekundärscharniermittel (C2) es der Sekundärplattform (2) erlauben, eine Ruhestellung einzunehmen, in der die Auflagefläche (S2) der Sekundärplattform (2) rechtwinklig zur Auflagefläche (S1) der Hauptplattform (1) ist, und eine Betriebsstellung einzunehmen, in der die beiden Auflageflächen (S2, S3) koplanar sind.

2. Belade-/Entladestation nach Anspruch 1, wobei die Hauptscharniermittel (C1) einen Hauptbetätiger (A1) umfassen, der mit der Hauptplattform (1) verbunden ist; wobei der Hauptbetätiger (A1) eine zurückgezogene Stellung einnimmt, die der abgesenkten Stellung der Hauptplattform (1) entspricht, und eine ausgezogene Stellung, die der angehobenen Stellung der Hauptplattform (1) entspricht.

3. Belade-/Entladestation nach einem der vorstehenden Ansprüche, wobei die Endscharniermittel (C3) einen Endbetätiger (A3) umfassen, der die Sekundärplattform (2) mit der Endplattform (3) verbindet; wobei der Endbetätiger (A3) eine zurückgezogene Stellung einnimmt, die der Nicht-Betriebsstellung der Endplattform (3) entspricht, und eine ausgezogene Stellung, die der Betriebsstellung der Endplattform (3) entspricht.

4. Belade-/Entladestation nach einem der vorstehenden Ansprüche, wobei die Sekundärscharniermittel (C2) einen Sekundärbetätiger (A2) umfassen, der die Sekundärplattform (2) mit der Hauptplattform (1) verbindet; wobei der Sekundärbetätiger (A2) eine zurückgezogene Stellung einnimmt, die der Nicht-Betriebsstellung der Sekundärplattform (2) entspricht, und eine ausgezogene Stellung, die der Betriebsstellung der Sekundärplattform (2) entspricht.

5. Belade-/Entladeanordnung, umfassend:
- eine Belade-/Entladestation nach einem der vorstehenden Ansprüche und
- ein Fahrzeug (V), umfassend eine hintere Öffnung (A) für den Zugang zu einem Innenraum des Fahrzeugs (V), in den Waren von der Rampe (B) geladen bzw. aus dem Waren auf die Rampe (B) entladen werden; wobei vorgesehen ist, dass wenn die Rampe (B) sich in ihrer Betriebsstellung befindet, die freie Endkante (RL) im Kontakt mit dem Fahrzeug (V) ist und das Beladen bzw. Entladen der Waren erlaubt.

6. Verfahren zum Beladen bzw. Entladen einer Belade-/Entladeanordnung, umfassend:
- eine Belade-/Entladestation nach Anspruch 1;
- ein Fahrzeug (V), umfassend eine hintere Öffnung (A) für den Zugang zu einem Innenraum des Fahrzeugs (V), in den Waren von der Rampe (B) geladen bzw. aus dem Waren auf die Rampe (B) entladen werden;
wobei das Verfahren Folgendes vorsieht:
- Positionieren der Rampe (R) mit ihrer Hauptplattform (1) in abgesenkte Stellung und mit der Sekundärplattform (2) und der Endplattform (3) in deren Nicht-Betriebsstellungen;
- Positionieren des Fahrzeugs (V) auf der Parkfläche (SP), die in der Nähe der Rampe (B) angeordnet ist;
- Positionieren der Hauptplattform (1) der Rampe (R) in angehobene Stellung;
- Positionieren der Sekundärplattform (2) in Betriebsstellung;
- Positionieren der Hauptplattform (1) in abgesenkte Stellung derart, dass ein Benutzer und/oder ein Ablademittel sich über die Hauptplattform (1) bewegen kann, bis er/es auf der Sekundärplattform (2) in der Nähe des Fahrzeugs (V) steht, um das Beladen bzw. Entladen durch Öffnen der hinteren Tür des Fahrzeugs (V) zu beginnen;
- Bewegen der Hauptplattform (1) in angehobene Stellung, sobald der Benutzer und/oder das Mittel die Rampe verlassen hat;
- Positionieren der Endplattform (3) in Betriebsstellung;
- Positionieren der Rampe (R) in Betriebsstellung, mit der Hauptplattform (1) in abgesenkte Stellung; wobei vorgesehen ist, dass wenn die Rampe (R) sich in Betriebsstellung befindet, die freie Endkante (RL) im Kontakt mit dem Fahrzeug (V) ist und das Beladen bzw. Entladen der Waren erlaubt.

7. Verfahren zum Beladen-/ Entladen einer Belade-/ Entladeanordnung
umfassend:
- eine Belade-/Entladestation nach einem der vorstehenden Ansprüche von 1 bis 4;
- ein Fahrzeug (V), umfassend eine hintere Öffnung (A) für den Zugang zu einem Innenraum des Fahrzeugs (V), in den Waren von der Rampe (B) geladen bzw. aus dem Waren auf die Rampe (B) entladen werden;
wobei das Verfahren Folgendes vorsieht:
- Positionieren der Rampe (R) mit ihrer Hauptplattform (1) in abgesenkte Stellung und mit der Sekundärplattform (2) und der Endplattform (3) in deren Nicht-Betriebsstellungen;
- Positionieren des Fahrzeugs (V) auf der Parkfläche (SP), die in der Nähe der Rampe (B) angeordnet ist;
- Positionieren der Hauptplattform (1) der Rampe (R) in angehobene Stellung;
- Positionieren der Sekundärplattform (2) in Betriebsstellung;
- Positionieren der Endplattform (3) in Betriebsstellung;
- Positionieren der Rampe (R) in Betriebsstellung, mit der Hauptplattform (1) in abgesenkte Stellung; wobei vorgesehen ist, dass wenn die Rampe (R) sich in Betriebsstellung befindet, die freie Endkante (RL) im Kontakt mit dem Fahrzeug (V) ist und das Beladen bzw. Entladen der Waren erlaubt.

## Revendications

1. Poste de chargement/déchargement pour un véhicule (V) comprenant une ouverture postérieure (A) d'accès à un compartiment du dit véhicule (V) duquel charger/décharger du matériel ; poste de chargement/déchargement comprenant :
- une surface de stationnement (SP) sur laquelle ledit véhicule (V) est stationné pendant la phase de chargement/déchargement ;
- un quai (B) comprenant une surface de chargement/déchargement (SB) qui se trouve à une hauteur (H) par rapport à ladite surface de stationnement (SP) ;
- une rampe (R) solidaire au ledit quai (B) ; ladite rampe (R) comprenant un bord d'extrémité de connexion (RC), connecté au ledit quai (B), et un bord d'extrémité libre (RL) ; ladite rampe (R) pouvant assumer une position opérationnelle pour permettre le déchargement depuis l'ouverture postérieure (A) du véhicule (V) sur la surface de chargement/déchargement (SB) du quai (B), et pouvant assumer une position non opérationnelle ;
ladite rampe (R) comprenant :
- une plateforme principale (1) qui comprend une surface d'appui (S1) ;
- des moyens principaux de charnière (C1) qui connectent ladite plateforme principale (1) au quai (B) ; lesdits moyens principaux de charnière (C1) ayant un axe de rotation parallèle au ledit bord d'extrémité de connexion (RC) et permettant le déplacement de ladite plateforme principale (1) d'une position abaissée, où la surface d'appui de la plateforme principale (1) est coplanaire à la surface de chargement/déchargement (SB) du quai (B), et une position relevée ;
- une plateforme secondaire (2), connectée à ladite plateforme principale (1) et comprenant une surface d'appui (S2) ; ladite plateforme secondaire (2) étant mobile par rapport à la plateforme principale (1), et elle peut assumer une position non opérationnelle et une position opérationnelle :
- une plateforme d'extrémité (3), qui est connectée à ladite plateforme secondaire (2) et qui comprend une surface d'appui (S3) ;
- des moyens d'extrémité de charnière (C3) qui connectent ladite plateforme d'extrémité (3) à ladite plateforme secondaire (2) ; lesdits moyens d'extrémité de charnière (C3) permettant à la plateforme d'extrémité (3) d'assumer une position de veille, où la surface d'appui (S3) de la plateforme d'extrémité (3) est orthogonale par rapport à la surface d'appui (S2) de la plateforme secondaire (2), et une position opérationnelle, où les deux dites surfaces d'appui (S2, S3) sont coplanaires ;
**caractérisé en ce que** ladite rampe (R) comprend :
- des moyens secondaires de charnière (C2) qui connectent ladite plateforme principale (1) à ladite plateforme secondaire (2) ; lesdits moyens secondaires de charnière (C2) permettant à la plateforme secondaire (2) d'assumer une position de veille, où la surface d'appui (S2) de la plateforme secondaire (2) est orthogonale par rapport à la surface d'appui (S1) de la plateforme principale (1), et une position opérationnelle, où les deux dites surface d'appui (S1, S2) sont coplanaires.

2. Poste de chargement/déchargement selon la revendication 1, où lesdits moyens principaux de charnière (C1) comprennent un actionneur principal (A1) connecté à la plateforme principale (1); ledit actionneur principal (A1) assumant une position contractée, à laquelle correspond la position abaissée de la plateforme principale (1), et une position allongée, à laquelle correspond la position relevée de la plateforme principale (1).

3. Poste de chargement/déchargement selon l'une quelconque des revendications précédentes, où lesdits moyens d'extrémité de charnière (C3) comprennent un actionneur d'extrémité (A3) qui connecte la plateforme secondaire (2) à la plateforme d'extrémité (3) ; ledit actionneur d'extrémité (A3) assumant une position contractée, à laquelle correspond la position non opérationnelle de la plateforme d'extrémité (3), et une position allongée, à laquelle correspond la position opérationnelle de la plateforme d'extrémité (3).

4. Poste de chargement/déchargement selon l'une quelconque des revendications précédentes, où lesdits moyens secondaires de charnière (C2) comprennent un actionneur secondaire (A2) qui connecte la plateforme secondaire (2) à la plateforme principale (1) ; ledit actionneur secondaire (A2) assumant une position contractée, à laquelle correspond la position non opérationnelle de la plateforme secondaire (2), et une position allongée, à laquelle correspond la position opérationnelle de la plateforme secondaire (2).

5. Groupe de chargement/déchargement comprenant :
- un poste de chargement/déchargement, selon l'une quelconque des revendications précédentes, et
- un véhicule (V) comprenant une ouverture postérieure (A) d'accès à un compartiment du dit véhicule (V) dans lequel charger du matériel depuis le quai (B) ou duquel décharger du matériel sur le quai (B) ; étant prévu que lorsque la rampe (R) se trouve dans sa position opérationnelle, ledit bord d'extrémité libre (RL) est en contact avec ledit véhicule (V) et permet le chargement/déchargement du dit matériel.

6. Processus pour le chargement/déchargement d'un groupe de chargement/déchargement comprenant :
- un poste de chargement/déchargement selon la revendication 1 ;
- un véhicule (V) comprenant une ouverture postérieure (A) d'accès à un compartiment du dit véhicule (V) dans lequel charger du matériel depuis le quai (B) ou duquel décharger du matériel sur le quai (B) ;
ledit processus prévoyant de :
- positionner la rampe (R) avec sa plateforme principale (1) en position abaissée et avec la plateforme secondaire (2) et la plateforme d'extrémité (3) dans leurs positions non opérationnelles ;
- positionner ledit véhicule (V) sur la surface de stationnement (SP), disposée à proximité du dit quai (B) ;
- positionner la plateforme principale (1) de la rampe (R) en position relevée ;
- positionner la plateforme secondaire (2) en position opérationnelle :
- positionner la plateforme principale (1) en position abaissée de manière à ce qu'un utilisateur et/ou un moyen de déchargement puisse/puissent passer au-dessus de la plateforme principale (1) jusqu'à stationner sur la plateforme secondaire (2) en se rapprochant du véhicule (V), de façon à commencer la phase de chargement/déchargement en ouvrant le hayon du véhicule (V) ;
- dès que ledit utilisateur et/ou ledit moyen cessent de stationner sur la rampe, déplacer la plateforme principale (1) en position relevée ;
- positionner la plateforme d'extrémité (3) en position opérationnelle ;
- positionner la rampe (R) dans sa position opérationnelle, avec sa plateforme principale (1) en position abaissée ; étant prévu que lorsque la rampe (R) se trouve dans sa position opérationnelle, ledit bord d'extrémité libre (RL) est en contact avec ledit véhicule (V) et permet le chargement/déchargement du dit matériel.

7. Processus pour le chargement/déchargement d'un groupe de chargement/déchargement comprenant :
- un poste de chargement/déchargement selon l'une quelconque des revendications de 1 à 4 ;
- un véhicule (V) comprenant une ouverture postérieure (A) d'accès à un compartiment du dit véhicule (V) dans lequel charger du matériel depuis le quai (B) ou duquel décharger du matériel sur le quai (B) ;
ledit processus prévoyant de :
- positionner la rampe (R) avec sa plateforme principale (1) en position abaissée et avec la plateforme secondaire (2) et la plateforme d'extrémité (3) dans leurs positions non opérationnelles ;
- positionner ledit véhicule (V) sur la surface de stationnement (SP), disposée à proximité du ledit quai (B) ;
- positionner la plateforme principale (1) de la rampe (R) en position relevée ;
- positionner la plateforme secondaire (2) en position opérationnelle ;
- positionner la plateforme d'extrémité (3) en position opérationnelle ;
- positionner la rampe (R) dans sa position opérationnelle, avec sa plateforme principale (1) en position abaissée ; étant prévu que lorsque la rampe (R) se trouve dans sa position opérationnelle, ledit bord d'extrémité libre (RL) est en contact avec ledit véhicule (V) et permet le chargement/déchargement du dit matériel.
